# EUROPEAN PATENT SPECIFICATION

(11) **EP 1 501 022 B1**
(45) Date of publication and mention of the grant of the patent: **24.09.2008**
(21) Application number: 03016922.1
(22) Date of filing: 24.07.2003
(51) Int. Cl.: G06F 17/30

(54) **Method for providing data in a mobile device and system**
Verfahren zur Bereitstellung von Daten in einer mobile Vorrichtung und System
Procédé pour fournir des données dans un dispositif et système mobile

(43) Date of publication of application: 26.01.2005
(73) Proprietor: Harman Becker Automotive Systems GmbH, 76307 Karlsbad (DE)
(72) Inventor: Wolf, Stefan, 71701 Schwieberdingen (DE); Lappe, Dirk, 62278 Karlsruhe (DE); Hovestadt, Guido, 58739 Wickede (DE)
(74) Representative: Grünecker, Kinkeldey, Stockmair & Schwanhäusser Anwaltssozietät

(56) References cited:
- US-A1- 2003 016 463
- US-A1- 2003 098 875
- US-B1- 6 209 026
- US-B1- 6 542 471

## Description

The invention relates to a method for providing data in a mobile device of a vehicle and system.

Recently, the desire for an information and entertainment system in vehicles has arisen, wherein the driver of a vehicle is provided with traffic and navigation information and the remaining passengers receive an entertainment program, such as audio or video broadcast. In the sense of the present invention, a mobile device of a vehicle is understood as either a navigation system, or a mobile radio or television receiver for receiving broadcasted audio or video signals. In the following the description will focus on the application of the invention in a navigation system. However, it should be clear that equally any other mobile devices in a vehicle, such as a mobile telephone, a radio or television receiver is suitable for embodying the invention.

Navigation systems, in particular, for use in vehicles comprise a storage medium, in which, in addition to program data, navigation data and voice data is also made available. While the vehicle is travelling, a processing device of the navigation system accesses the data made available and processes it in real time. Data compression is usually required in particular to make available voice data. During the making available of the data, a compromise is selected between, on the one hand, a high degree of compression when encoding the data in order to reduce the necessary storage area, but requiring additional computing hardware and, on the other hand, only a small degree of compression in order to permit real time processing in the processing device without using complex decoding hardware or software.

In standard navigation systems, voice samples which are used to output navigation instructions are provided on a navigation CD or stored in an internal memory of the navigation system device. For this purpose, the data is either encoded with a low-compression Code, using a coding algorithm, such as Adaptive Delta Pulse Code Modulation (ADPCM) and then decoded at a later point in time by means of software or hardware, or using high-compression formats, for example in accordance with MP3, and then decoded by a specialized piece of digital signal processing hardware.

The known methods each have complementary problems. In the case of simple algorithms decoding can be achieved in real time, i.e. by the central processing unit (CPU) of the navigation system device. However, the compression rates which can be achieved are comparatively low and are currently approximately 64 kbit/s. Details of ADPCM are available from ITU-T recommendations G.726 and G.727 envisioning data rates of 16, 24, 32 and 40 kbit/s. According to the new ITU standard G.722 for broadband speech transmission based on a frequency range of 50 Hz to 7 kHz, which would result in normal PCM-technique to a data rate of 128 kbit/s, a compression to 64kbit/s can be obtained.

In complex methods, for example according to the ITU standard G.723 or MP3, a significantly high degree of compression (for example, a compression factor up to 10) results in a data rate of approximately 10-32 kbit/s with the same reproduction quality.

However, the decoding of the stored data needs a significant calculation power and can only be decoded by means of software in systems with sufficient calculation power Hence, additional hardware often needs to be installed in the navigation devices or existing components must be used by a plurality of applications in a time sharing arrangement. This may also be a reason for certain systems why navigation language cannot be mixed with MP3 music in customary navigation systems because more than one decoding processes have to be established simultaneous.

US 2003/0016463 A1 discloses a typical multi-media application that receives data in different formats and converts this data into a common format. The aforementioned data is subsequently stored in order to make it available to a plurality of further devices.

The object of the invention is to provide an improved method for providing data in a mobile device in real time and without requiring additional hardware and a corresponding mobile device and system.

This object is achieved by means of a method for providing data in a mobile device having the features of claim 1, a system having the features of claim 8 and a mobile device having the features of claim 14.

The advantages of both methods known from the prior art are advantageously combined in the embodiments of the present invention. On the one hand, data can be accessed in a high-compression format, the compression being so high that real-time processing exceeds the calculation power of the system or is no longer possible unless additional hardware capacity is provided. In addition such a system can work with data offered in different compression formats without the necessity of having a real-time decoder for this specific format.

On the other hand, real-time processing of the highly compressed data is nevertheless possible by means of the processing device if the data is transmitted and stored in a less dense, more easily decodable or decompressed format in the navigation device. As a result, the data which is made available in this way can then nevertheless be processed and output in real time by means of simple hardware construction or software processing.

An exemplary embodiment is explained in more detail below with reference to the drawing, in which:
- Fig. 1: shows essential components of a navigation system for carrying out a preferred method, and
- Fig. 2: shows a sequence of steps of the preferred method for providing data.

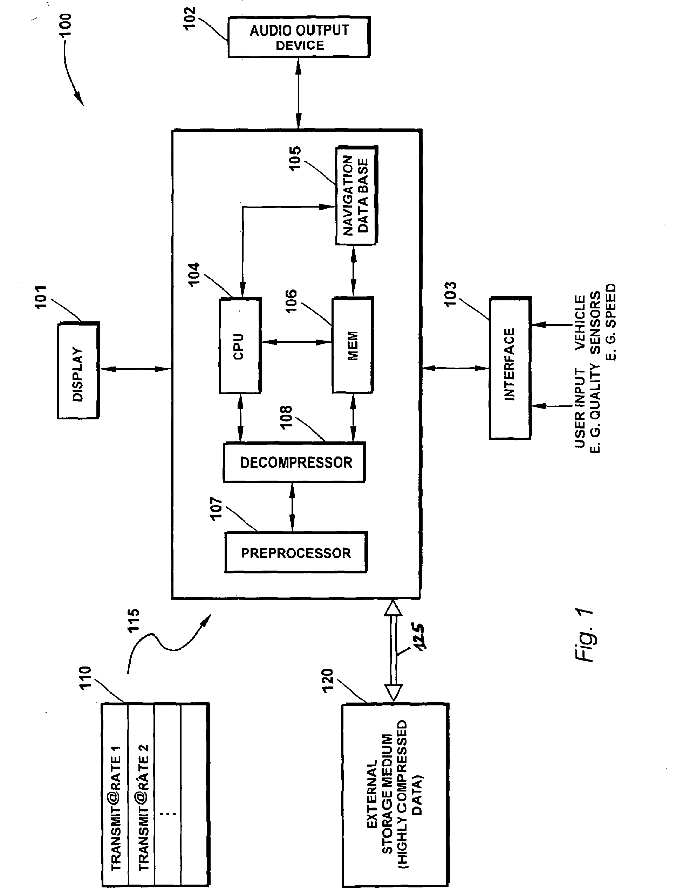

As apparent from figure 1, a navigation system comprises a navigation device indicated by 100, which can communicate with a display 101, e.g. an LCD or TFT display unit arranged at a suitable position for the driver of a vehicle. Moreover, the navigation device comprises a connection to an audio output device 102, such as a sound system including one or more loudspeakers.

Finally, the device comprises an interface unit 103 providing the user with the possibility to input preferred parameters or instructions, such as start and destination locations, quality of the displayed data or the audio output. Further, through the interface unit 103, vehicle sensor signals e.g. indicating the speed or direction of the vehicle direction are input.

Those in the art are aware of further details of a common navigation device, such that a more detailed description has been omitted for the purpose of conciseness of the description.

As will be further appreciated by those in the art, the navigation device comprises one or more central processing units CPUs 104 in communication with a navigation database 105 and a main memory 106 for reading and writing navigation data during operation of the navigation device and as the vehicle moves along a route. The main memory may also hold program data and general data and in addition, voice data or other acoustic data for signalling navigation instructions to the user. As generally known, a navigation database can be realized by means of a CD-ROM disc or any other kind of mass storage, such as E-PROMS, flash memories, etc.

In order to update or supplement the navigation data base having a limited storage capacity, the navigation system accesses an external data source, such as a server 110 or an external storage medium 120. As indicated in figure 1, the server is exemplarily shown to be connected by radio communication, for example, under the existing mobile communication standard, such as GSM or UMTS. Alternatively, a server may be connected by means of a wireless or wired connection with the navigation device, e.g. for performing a download in the course of a regular maintenance service.

The external storage medium may be any kind of mass storage device, e.g. CD or DVD disc drives, semiconductor memories, flash memories, which are either internal or external to the vehicle and connected by a suitable connection to the navigation device, for instance, a wired or optical data bus 125.

Common to the situation described above situation is the requirement or request of the navigation device to access additional data that is not yet stored in the navigation database 105 or main memory 106 for navigation purposes. Moreover, it is assumed that the data at the server or the external storage medium exists in a highly compressed format having a compression factor in a range of 5 to 10, for example, MPEG audio layer 3 (MP3) or others.

Hence, upon establishing a connection to the server or the external storage medium, the navigation device provides a pre-processing stage 107 and a decompression stage 108 to convert the data from the highly compressed format to a second format having a lesser degree of compression.

It is noted that the second format does not necessarily require a lesser degree of compression. According to an alternative preferred embodiment, the second format may also have a higher degree of compression than the first format, provided that this higher compressed format is more suitable for real-time processing by the mobile device.

The data itself can be any kind of information-related data, such as navigation instructions in any desired language or audio data. Further, the method of the invention can be applied to the transmission of image data, such as still pictures, moving pictures, or map data.

The data may then be stored in the main memory 106 or navigation database 105 in this less compressed format for future use.

It is noted that for the described pre-processing and decompressing operation, the ordinary computing and storage capacity provided in the navigation device is essentially sufficient. In particular, because the compression is not carried out instantly to full extent, but only at a time when the data is actually required by the navigation device to provide output signals in visual or audible form, the ordinary computing and storage constraints should not be significantly exceeded.

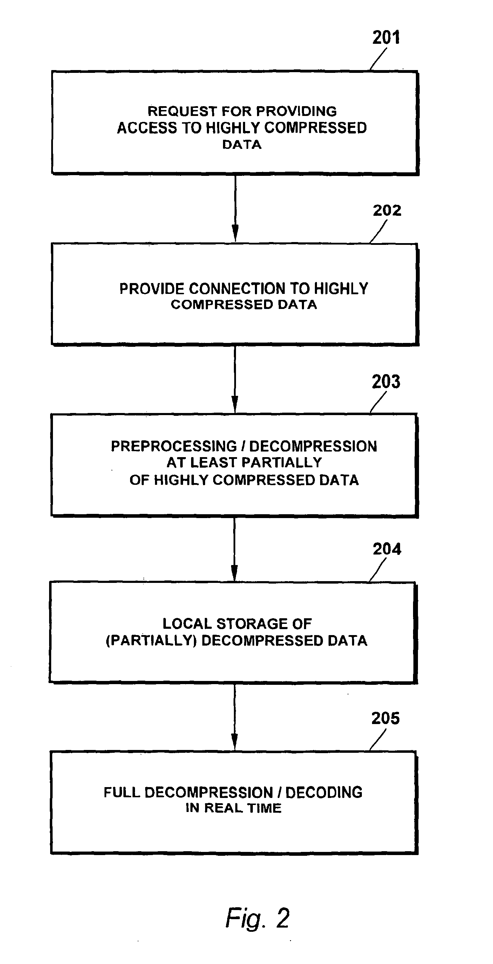

The preferred method for providing data in the navigation device will now be explained with reference to figure 2.

In step 201, the navigation device 105 has identified a request for providing access to highly compressed data. As mentioned before, this request is based on a need for data, which is not present in the local navigation database 105 or local memory 106 in decompressed form. As an example, the requested data could be additional or corrected data or simply data that has not yet been stored due to storage capacity restrictions.

For instance, navigation data relating to a specific region to which the vehicle has not yet travelled might justify a need for transmitting additional data from a server or external storage medium. Another example would be the transmission of a different navigation language. A further example is the provision of off-board navigation instructions or a hybrid on-board/off-board navigation requiring navigation instructions from a central server.

Instead of a request, there might be situations where the server tries to unload data to the navigation device, such as a mandatory data update.

To access to a data source of highly compressed data, the method proceeds with providing a connection to the data source as indicated in figure 2 with step 202. As mentioned above, the connection can either be a wireless online connection according to a currently available telecommunication standard or a wired connection using available transmission protocols.

Subsequently, data is transmitted from the server or the external storage medium over the established connection to the navigation device and pre-processed by applying a suitable decompression algorithm to decode the highly compressed data at least partially as indicated in step 203. The result is a decompression from the highly compressed format into the same or a different format having a lesser (or none) degree compression than the former one. In this format, the data may be locally stored, for example, in navigation database 105 or memory 106 as indicated by step 204. It is noted that this partial decompression can be essentially accomplished with the computing capacity of the ordinary one or more CPUs 104 without providing additional special decoding and decompression hardware, e.g. a decoder or a digital signal processing chip.

Moreover, in view of the fact that the data can be pre-processed without real-time requirements, the computing capacity can be balanced more easily during inactive periods, where the CPU is not occupied with other tasks.

In the last step of figure 2 indicated by 205, the navigation device needs to access the locally stored data and output the data in real time in form of visible or audible signals. Hence, the pre-processed and partially decompressed data undergoes full decompression and the data is output in real time. Real time in this context means providing data in the desired quality in form of navigation instructions to the driver as the vehicle moves along the route The speed with which navigation instructions are output to the driver is dependent on the vehicle speed. These output signals may then be further processed or stored for other purposes. For example, after manipulation, the data may possibly be transmitted back to the server or the external storage medium.

It is important to note that the conversion from partially decompressed data to the fully compressed format can be equally accomplished with the existing computing capacity. Hence, there is no need to provide additional computing or decoding hardware or to occupy other existing special decoding hardware serving other functions, for instance audio or video decompression. Moreover, when highly compressed data is transmitted to the navigation device this has the general advantage of reduced connection time and correspondingly lowered costs.

According to a preferred embodiment, the server may provide data for transmission at a plurality of different data rates, while the user or the navigation device itself may select a suitable data rate. This choice can be in accordance with the calculation power of the system or with other operational parameters, such as the vehicle speed or the quality, with which the data is output on the display 101 or the audio output device 102 or the demands of the user. As a user-valuable feature it is possible to save time and costs selecting a poorer quality with faster transmission i.e. for evaluation especially in an mobile environment. The final selection may be downloaded afterwards with higher quality. It is also possible to provide the final high quality data when the vehicle has reached access to a non-mobile data source. The final data now may be loaded from a mass storage medium (i.e. Memory-Card) or via a local network (i.e. LAN / WLAN).The advantage thereof is to have quick access in a mobile environment saving time and costs without losing quality for the final set-up.

Moreover, the degree with which the partial decompression is carried out in step 203 can be made dependent on the actual free storage capacity available in the navigation database 105 or the memory 106.

As explained above, by providing the two-stage processing/decompression method, the hardware computing and memory storage requirements do not undergo additional capacity constraints. As a result, the decoder hardware used for direct real-time compression of highly compressed data, for example, the (MP3-) audio decoder chip is not impaired by the processing of real-time navigation signals.

As already mentioned in the foregoing, the method of the present invention is not only applicable to a navigation device described above as an exemplary embodiment. For example, video data could be transferred from a server to a mobile device in accordance with the following examples.

The server 110 (see figure 1) has original video data compressed in the MPEG4 compression format available for transmission to the mobile device. The transmission to the mobile device then takes place in this format and is pre-processed in the mobile device to obtain video data in MPEG2 format, which is then decoded in real time when desired by the user. To this end, the mobile device comprises a real-time MPEG2 decoder. Although it might take more time to pre-process and convert the received data from MPEG4 to MPEG2 format, this can be done offline, i.e. without establishing an online connection to the server. Due to the use of the fast transmission format, the online connection time can be reduced with a corresponding cost savings.

As a further illustrative example for the method of the invention, it is assumed that the navigation device comprises a hardware decoder for MP3. The server provides audio data in a format having a higher degree of compression than MP3. Upon reception, the navigation device transcodes the received data with a correspondingly adapted data rate into the MP3 format. Thereafter, data with high quality is available in MP3 format. The advantage of the invention is that less data were transmitted using the highly compressed format than would be required when transmitting MP3 formatted data.

The data conversion is preferably processed in a manner that the user does not notice any waiting time for having the data available. Hence, the processing may be done in the background or during periods where the device is switched off by the user.

## Claims

1. A method for providing data in a mobile device (100) usable in a vehicle comprising the steps of:
providing (202) said data in a first format to said mobile device (100), said first format having a first degree of compression;
processing (203) said data from said first format into a second format before said data is used by said device (100), said second format having a second degree of compression than said first format;
storing (204) said data in second format;
**characterised by**
decompressing (205) said data in real time from said second format when said data is needed or used by said device (100), where real time means providing said data in the desired quality to the driver as the vehicle moves along the route,
wherein the degree of compression of said second format depends on at least one of the operational characteristics of vehicle speed, users selected data quality, computing and storage capacity of the navigation device.

2. The method according to claim 1, wherein the data to be processed into real-time navigation instruction is video data and/or voice data and/or route data to be displayed.

3. The method according to claim 1 or 2, wherein the decompression step (205) from said second format is carried out with a processing speed sufficient for allowing outputting navigation instructions in real time according to the vehicle's movement.

4. The method according to claims 1 to 3, wherein the step of providing (201, 202) data in a first format comprises loading the data in the first format from an external storage device (120) and the step of processing (203) said data into the second format comprises converting the data to a lesser degree of compression.

5. The method according to one of claims 1 to 3, wherein the step of providing data in a first format comprises connecting the navigation device to a server via an online radio communication link.

6. The method according to one of claims 1 to 5, wherein the degree of compression of the second format depends on at least one of the operational characteristics of vehicle speed, users selected data quality, computing and storage capacity of the navigation device.

7. The method according to claim 1, wherein the provision of data in a first format is performed upon request.

8. A system comprising a mobile device (100) for a vehicle and a server (110),
wherein data is transmitted to the mobile device over at least one transmission channel (115) comprising:
means at the server (110) for providing and transmitting data in a first format to said device (100), said format having a high degree of compression; pre-processing means (107, 108) at the mobile device (100) for processing said data from said first format into a second format before said data is needed by said mobile device, said second format having a lesser degree of compression than said first format;
storage means at the mobile device (105, 106) for storing said data in said second format;
**characterised by**
decompression means (104, 108) at the mobile device (100) for decompressing in real time said data from said second format when said data is needed by said device (100), where real time means providing said data in the desired quality to the driver as the vehicle moves along the route,
wherein the degree of compression of said second format depends on at least one of the operational characteristics of vehicle speed, users selected data quality, computing and storage capacity of the navigation device.

9. The system according to claim 8, wherein the means at the server (110) is adapted to provide the data with one of a plurality of data rates and the server transmits the data with a selected data rate.

10. The system according to claim 9, wherein the selected data rate matches the processing capability of the navigation device (100) to process the data.

11. The system according to claim 9, wherein the data rate is selected in accordance with the vehicle speed.

12. The system according to claim 9, wherein the preferred data rate is selected in accordance with the user's desired quality of outputting the decompressed data in visual or audio form in real time.

13. The system according to claim 8, wherein the provision of data in a first format by the server is upon request.

14. A mobile device (100) of a vehicle for providing data, comprising:
means for receiving transmission of data from an external data source (110, 120) in a first format, said format having a high degree of compression;
pre-processing means (107) for processing said data from said first format into a second format before said data is needed by said navigation device (100), said second format having a lesser degree of compression than said first format; and storage means (105, 106) for storing said data in said second format;
**characterised in that**
decompression means (108) for decompressing said data in real time from said second format when said data is needed by said device (100), where real time means providing said data in the desired quality to the driver as the vehicle moves along the route,
wherein the degree of compression of said second format depends on at least one of the operational characteristics of vehicle speed, users selected data quality, computing and storage capacity of the navigation device.

15. The mobile device (100) according to claim 14, further comprising a navigation database (105) for storing the decompressed data in the second format.

16. The mobile device (100) according to claim 14 or 15, further comprising an audio output device (102) for outputting the decompressed data as audible navigation instructions in real time according to the vehicle movement.

17. The mobile device (100) according to one of claims 14 to 16, further comprising a display device (101) for outputting the decompressed data as visual navigation instructions in real time according to the vehicle's movement.

18. The mobile device(100) according to one of claims 14 to 17, being adapted as a navigation system or head unit mounted in the vehicle.

## Patentansprüche

1. Verfahren zum Bereitstellen von Daten in einer mobilen Vorrichtung (100), die in einem Fahrzeug eingesetzt werden kann, wobei es die folgenden Schritte umfasst:
Bereitstellen (202) der Daten in einem ersten Format für die mobile Vorrichtung (100), wobei das erste Format einen ersten Kompressionsgrad aufweist;
Verarbeiten (203) der Daten von dem ersten Format zu einem zweiten Format, bevor die Daten durch die Vorrichtung (100) verwendet werden, wobei das zweite Format einen zweiten Kompressionsgrad hat als das erste Format;
Speichern (204) der Daten in dem zweiten Format;
**gekennzeichnet durch:**
Dekomprimieren (205) der Daten in Echtzeit aus dem zweiten Format, wenn die Daten von der Vorrichtung (100) benötigt oder verwendet werden, wobei Echtzeit bedeutet, dass die Daten dem Fahrer in der gewünschten Qualität bereitgestellt werden, wenn sich das Fahrzeug auf der Route bewegt,
wobei der Grad der Kompression des zweiten Formats von wenigstens einer der Betriebseigenschaften Fahrzeuggeschwindigkeit, vom Benutzer ausgewählter Datenqualität sowie Rechen- und Speicherkapazität der Navigationsvorrichtung abhängt.

2. Verfahren nach Anspruch 1, wobei die zu Echtzeit-Navigationsanweisungen zu verarbeitenden Daten Videodaten und/oder Sprachdaten und/oder Routendaten sind, die angezeigt werden sollen.

3. Verfahren nach Anspruch 1 oder 2, wobei der Schritt (205) der Dekompression aus dem zweiten Format mit einer Verarbeitungsgeschwindigkeit ausgeführt wird, die ausreicht, um das Ausgeben von Navigationsanweisungen in Echtzeit entsprechend der Bewegung des Fahrzeugs zu ermöglichen.

4. Verfahren nach den Ansprüchen 1 bis 3, wobei der Schritt des Bereitstellens (201, 202) von Daten in einem ersten Format Laden der Daten in dem ersten Format aus einer externen Speichervorrichtung (120) umfasst, und der Schritt des Verarbeitens (203) der Daten zu dem zweiten Format Umwandeln der Daten in einen geringeren Kompressionsgrad umfasst.

5. Verfahren nach einem der Ansprüche 1 bis 3, wobei der Schritt des Bereitstellens von Daten in einem ersten Format Verbinden der Navigationsvorrichtung mit einem Server über eine Online-Funkkommunikationsverbindung umfasst.

6. Verfahren nach einem der Ansprüche 1 bis 5, wobei der Grad der Kompression des zweiten Formats von wenigstens einer der Betriebseigenschaften Fahrzeuggeschwindigkeit, vom Benutzer ausgewählter Datenqualität sowie Rechen- und Speicherkapazität der Navigationsvorrichtung abhängt.

7. Verfahren nach Anspruch 1, wobei das Bereitstellen von Daten in einem ersten Format auf Anforderung durchgeführt wird.

8. System, das eine mobile Vorrichtung (100) für ein Fahrzeug und einen Server (110) umfasst, wobei Daten über wenigstens einen Sendekanal (115) zu der mobilen Vorrichtung gesendet werden und das System umfasst:
eine Einrichtung an dem Server (110) zum Bereitstellen und Senden von Daten in einem ersten Format zu der Vorrichtung (100), wobei das Format einen hohen Kompressionsgrad aufweist;
eine Vorverarbeitungseinrichtung (107, 108) an der mobilen Vorrichtung (100) zum Verarbeiten der Daten von dem ersten Format zu einem zweiten Format, bevor die Daten von der mobilen Vorrichtung benötigt werden, wobei das zweite Format einen geringeren Kompressionsgrad aufweist als das erste Format;
eine Speichereinrichtung an der mobilen Vorrichtung (105, 106) zum Speichern der Daten in dem zweiten Format;
**gekennzeichnet durch:**
eine Dekompressionseinrichtung (104, 108) an der mobilen Vorrichtung (100) zum Dekomprimieren der Daten aus dem zweiten Format in Echtzeit, wenn die Daten von der Vorrichtung (100) benötigt werden, wobei Echtzeit bedeutet, dass die Daten dem Fahrer in der gewünschten Qualität bereitgestellt werden, wenn sich das Fahrzeug auf der Route bewegt,
wobei der Grad der Kompression des zweiten Formats von wenigstens einer der Betriebseigenschaften Fahrzeuggeschwindigkeit, vom Benutzer ausgewählter Datenqualität sowie Rechen- und Speicherkapazität der Navigationsvorrichtung abhängt.

9. System nach Anspruch 8, wobei die Einrichtung an dem Server (110) so eingerichtet ist, dass sie die Daten mit einer einer Vielzahl von Datenraten bereitstellt, und der Server die Daten mit einer ausgewählten Datenrate sendet.

10. System nach Anspruch 9, wobei die ausgewählte Datenrate der Verarbeitungskapazität der Navigationsvorrichtung (100) zum Verarbeiten der Daten entspricht.

11. System nach Anspruch 9, wobei die Datenrate entsprechend der Fahrzeuggeschwindigkeit ausgewählt wird.

12. System nach Anspruch 9, wobei die bevorzugte Datenrate entsprechend der vom Benutzer gewünschten Qualität der Ausgabe der dekomprimierten Daten in visueller oder akustischer Form in Echtzeit ausgewählt wird.

13. System nach Anspruch 8, wobei das Bereitstellen von Daten in einem ersten Format durch den Server auf Anforderung stattfindet.

14. Mobile Vorrichtung (100) eines Fahrzeugs zum Bereitstellen von Daten, die umfasst:
eine Einrichtung zum Empfangen gesendeter Daten von einer externen Datenquelle (110, 120) in einem ersten Format, wobei das Format einen hohen Kompressionsgrad aufweist;
eine Vorverarbeitungseinrichtung (107) zum Verarbeiten der Daten von dem ersten Format zu einem zweiten Format, bevor die Daten von der Navigationsvorrichtung (100) benötigt werden, wobei das zweite Format einen geringeren Kompressionsgrad aufweist als das erste Format; und
eine Speichereinrichtung (105, 106) zum Speichern der Daten in dem zweiten Format;
eine Dekompressionseinrichtung (108) zum Dekomprimieren der Daten aus dem zweiten Format in Echtzeit, wenn die Daten von der Vorrichtung (100) benötigt werden, wobei Echtzeit bedeutet, dass die Daten dem Fahrer bereitgestellt werden, wenn sich das Fahrzeug auf der Route bewegt,
wobei der Grad der Kompression des zweiten Formats wenigstens von einer der Betriebseigenschaften Fahrzeuggeschwindigkeit, vom Benutzer ausgewählter Datenqualität sowie Rechen- und Speicherkapazität der Navigationsvorrichtung abhängt.

15. Mobile Vorrichtung (100) nach Anspruch 14, die des Weiteren eine Navigations-Datenbank (105) zum Speichern der dekomprimierten Daten in dem zweiten Format umfasst.

16. Mobile Vorrichtung (100) nach Anspruch 14 oder 15, die des Weiteren eine Audio-Ausgabevorrichtung (102) zum Ausgeben der dekomprimierten Daten als akustische Navigationsanweisungen in Echtzeit entsprechend der Fahrzeugbewegung umfasst.

17. Mobile Vorrichtung (100) nach einem der Ansprüche 14 bis 16, die des Weiteren eine Anzeigevorrichtung (101) zum Ausgeben der dekomprimierten Daten als sichtbare Navigationsanweisungen in Echtzeit entsprechend der Bewegung des Fahrzeugs umfasst.

18. Mobile Vorrichtung (100) nach einem der Ansprüche 14 bis 17, die als Navigationssystem oder Haupteinheit (head unit) eingerichtet ist, die in dem Fahrzeug angebracht ist.

## Revendications

1. Procédé de fourniture de données dans un dispositif mobile (100) pouvant être utilisé dans un véhicule comprenant les étapes consistant à:
fournir (202) lesdites données dans un premier format audit dispositif mobile (100), ledit premier format ayant un premier degré de compression;
traiter (203) lesdites données dudit premier format en un second format avant que lesdites données soient utilisées par ledit dispositif (100), ledit second format ayant un second degré de compression par rapport audit premier format;
stocker (204) lesdites données dans un second format;
**caractérisé en ce qu'**il comprend les étapes consistant à:
décompresser (205) lesdites données en temps réel à partir dudit second format lorsque lesdites données sont nécessaires ou utilisées par ledit dispositif (100), l'expression "temps réel" signifiant: fournir lesdites données dans la qualité souhaitée au conducteur pendant que le véhicule se déplace le long de la route,
dans lequel le degré de compression dudit second format dépend d'au moins une des caractéristiques fonctionnelles parmi la vitesse du véhicule, la qualité des données sélectionnée par l'utilisateur, la capacité de calcul et de stockage du dispositif de navigation.

2. Procédé selon la revendication 1, dans lequel les données destinées à être traitées en instruction de navigation en temps réel sont des données vidéo et/ou des données vocales et/ou des données routières à afficher.

3. Procédé selon la revendication 1 ou 2, dans lequel l'étape de décompression (205) à partir dudit second format est exécutée avec une vitesse de traitement suffisante pour permettre la sortie des instructions de navigation en temps réel selon le déplacement du véhicule.

4. Procédé selon l'une des revendications 1 à 3, dans lequel l'étape consistant à fournir (201, 202) des données dans un premier format comprend une étape consistant à charger les données dans le premier format à partir d'un dispositif de stockage externe (120) et l'étape consistant à traiter (203) lesdites données dans le second format comprend l'étape consistant à convertir les données en un degré moindre de compression.

5. Procédé selon l'une des revendications 1 à 3, dans lequel l'étape consistant à fournir des données dans un premier format comprend l'étape consistant à connecter le dispositif de navigation à un serveur par l'intermédiaire d'une liaison de radiocommunication en ligne.

6. Procédé selon l'une des revendications 1 à 5, dans lequel le degré de compression du second format dépend d'au moins une caractéristique fonctionnelle parmi la vitesse du véhicule, la qualité des données sélectionnée par l'utilisateur, le calcul et la capacité de stockage du dispositif de navigation.

7. Procédé selon la revendication 1, dans lequel la fourniture des données dans un premier format est accomplie à la demande.

8. Système comprenant un dispositif mobile (100) pour un véhicule et un serveur (110), dans lequel des données sont transmises au dispositif mobile par l'intermédiaire d'au moins un canal de transmission (115) comprenant:
un moyen, au niveau du serveur (110), destiné à fournir et transmettre des données dans un premier format audit dispositif (100), ledit format ayant un haut degré de compression;
un moyen de prétraitement (107, 108) au niveau du dispositif mobile (100) destiné à traiter lesdites données dudit premier format en un second format avant que ledit dispositif mobile ait besoin desdites données, ledit second format ayant un degré de compression moindre par rapport audit premier format;
un moyen de stockage au niveau du dispositif mobile (105, 106) destiné à stocker lesdites données dans ledit second format;
**caractérisé en ce qu'**il comprend
un moyen de décompression (104, 108) au niveau du dispositif mobile (100) destiné à décompresser en temps réel lesdites données à partir dudit second format lorsque ledit dispositif (100) a besoin desdites données, l'expression "en temps réel" signifiant: fournir lesdites données dans la qualité souhaitée au conducteur pendant que le véhicule se déplace le long de la route,
dans lequel le degré de compression dudit second format dépend d'au moins une des caractéristiques fonctionnelles parmi la vitesse du véhicule, la qualité des données sélectionnée par l'utilisateur, la capacité de calcul et de stockage du dispositif de navigation.

9. Système selon la revendication 8, dans lequel le moyen, au niveau du serveur (110), est adapté pour fournir les données à l'un parmi une pluralité de débits binaires et le serveur transmet les données à un débit binaire sélectionné.

10. Système selon la revendication 9, dans lequel le débit binaire sélectionné concorde avec la capacité de traitement du dispositif de navigation (100) pour traiter les données.

11. Système selon la revendication 9, dans lequel le débit binaire est sélectionné en fonction de la vitesse du véhicule.

12. Système selon la revendication 9, dans lequel le débit binaire préféré est sélectionné en fonction de la qualité de sortie des données décompressées sous forme visuelle ou audio en temps réel que souhaite l'utilisateur.

13. Système selon la revendication 8, dans lequel la fourniture de données dans un premier format par le serveur est à la demande.

14. Dispositif mobile (100) d'un véhicule destiné à fournir des données, comprenant:
un moyen destiné à recevoir une transmission de données depuis une source de données externes (110, 120) dans un premier format, ledit format ayant un haut degré de compression;
un moyen de prétraitement (107) destiné à traiter lesdites données dudit premier format en un second format avant que ledit dispositif de navigation (100) ait besoin des données, ledit second format ayant un degré de compression moindre par rapport audit premier format; et un moyen de stockage (105, 106) destiné à stocker lesdites données dans ledit second format;
**caractérisé en ce qu'**il comprend
un moyen de décompression (108) destiné à décompresser lesdites données en temps réel à partir dudit second format lorsque ledit dispositif (100) a besoin des données, l'expression "en temps réel" signifiant: fournir lesdites données dans la qualité souhaitée au conducteur pendant que le véhicule se déplace le long de la route,
dans lequel le degré de compression dudit second format dépend d'au moins une des caractéristiques fonctionnelles parmi la vitesse du véhicule, la qualité des données sélectionnée par l'utilisateur, la capacité de calcul et de stockage du dispositif de navigation.

15. Dispositif mobile (100) selon la revendication 14, comprenant en outre une base de données de navigation (105) destinée à stocker les données décompressées dans le second format.

16. Dispositif mobile (100) selon la revendication 14 ou 15, comprenant en outre un dispositif de sortie audio (102) destiné à sortir les données décompressées en tant qu'instructions de navigation audibles en temps réel selon le déplacement du véhicule.

17. Dispositif mobile (100) selon l'une des revendications 14 à 16, comprenant en outre un dispositif d'affichage (101) destiné à sortir les données décompressées en tant qu'instructions de navigation visuelles en temps réel selon le déplacement du véhicule.

18. Dispositif mobile (100) selon l'une des revendications 14 à 17, qui est adapté en tant que système de navigation ou unité de tête monté dans le véhicule.
